# EUROPEAN PATENT APPLICATION

(11) **EP 3 075 999 A1**
(43) Date of publication of application: **05.10.2016**
(21) Application number: 16162152.9
(22) Date of filing: 24.03.2016
(51) Int. Cl.: F02M 26/14, F02M 26/50, F01N 3/36, F01N 13/10

(54) **INTERNAL COMBUSTION ENGINE**

(30) Priority: 31.03.2015 JP 2015072984
(71) Applicant: KABUSHIKI KAISHA TOYOTA JIDOSHOKKI, Kariya-shi, Aichi 448-8671 (JP)
(72) Inventor: TOYAMA, Hiroaki, Kariya-shi,, Aichi 448-8671 (JP)
(74) Representative: TBK

(57) **Abstract**

A diesel engine (1) includes an exhaust passage (7) through which exhaust gas generated in plural cylinders (3) is discharged, a fuel addition valve (20) adding fuel to the exhaust gas, and an exhaust gas recirculation system (21) including an exhaust gas recirculation passage (22) that allows a part of the exhaust gas to return to the cylinders as exhaust gas recirculation gas. The exhaust passage is connected to a portion of an exhaust manifold (8) corresponding to the #3 cylinder positioned at one end among the plurality of cylinders, the fuel addition valve is disposed at a portion corresponding to the #3 cylinder and adds the fuel when gas is exhausted from the #3 cylinder, the exhaust gas recirculation passage is connected to a portion of the exhaust manifold corresponding to the #1 cylinder positioned at the other end among the plurality of cylinders, and the #1 cylinder explodes after the explosion of the #3 cylinder.

## Description

### TECHNICAL FIELD

The present invention relates to an internal combustion engine.

### BACKGROUND

For example, a diesel engine disclosed in Japanese Unexamined Patent Publication No. 2001-280125 is known as an internal combustion engine in the related art. The diesel engine disclosed in Japanese Unexamined Patent Publication No. 2001-280125 includes first to fourth cylinders, and intake air is introduced to combustion chambers of the respective cylinders through an intake manifold and an intake pipe. Exhaust gas, which is generated in the combustion chambers of the respective cylinders, is discharged to an exhaust manifold from exhaust ports of the respective cylinders. An exhaust gas collecting pipe, which introduces exhaust gas to a turbine of a turbocharger, is connected to a portion of the exhaust manifold that corresponds to the fourth cylinder. The exhaust gas is discharged to an exhaust pipe from the turbine. A fuel addition nozzle, which injects fuel to the exhaust gas collecting pipe, is mounted on a cylinder head of the diesel engine so as to face the exhaust port of the fourth cylinder. One end of an exhaust gas recirculation pipe (EGR pipe), which allows a part of exhaust gas to return to an intake system, is connected to a portion of the exhaust manifold that corresponds to the first cylinder. An EGR cooler and an EGR valve are provided on the EGR pipe.

### SUMMARY

However, there is a possibility that the clogging or the like of the EGR cooler and the EGR valve may occur since fuel, which is added by the fuel addition nozzle, flows into the EGR pipe in the related art.

An object of the invention is to provide an internal combustion engine that can reduce the amount of added fuel flowing to an exhaust gas recirculation (EGR) system.

According to an aspect of the invention, there is provided an internal combustion engine including: an engine body that includes a plurality of cylinders arranged in one direction; an intake passage that is connected to the engine body through an intake manifold and allows air to be taken into the cylinders; an exhaust passage which is connected to the engine body through an exhaust manifold and through which exhaust gas generated in the cylinders is discharged; a fuel addition valve that adds fuel to the exhaust gas; and an exhaust gas recirculation system including an exhaust gas recirculation passage that connects the exhaust manifold to an intake system including the intake manifold and the intake passage and allows a part of the exhaust gas to return to the cylinders as exhaust gas recirculation gas. The exhaust passage is connected to a portion of the exhaust manifold that corresponds to the cylinder positioned at one end among the plurality of cylinders, the fuel addition valve is disposed at a portion that corresponds to the cylinder positioned at the one end and adds the fuel when gas is exhausted from the cylinder positioned at the one end, the exhaust gas recirculation passage is connected to a portion of the exhaust manifold that corresponds to the cylinder positioned at the other end among the plurality of cylinders, and the cylinder positioned at the other end explodes after the explosion of the cylinder positioned at the one end.

In the internal combustion engine, when the cylinder positioned at one end (which is close to the exhaust passage) among the plurality of cylinders explodes, most of exhaust gas generated in the cylinder flows in the exhaust passage. When gas is exhausted from the cylinder, fuel is added to the exhaust gas by the fuel addition valve that is disposed at a portion corresponding to the cylinder. Then, the added fuel flows in the exhaust passage and flows in the exhaust gas recirculation passage through the exhaust manifold. After that, when the cylinder positioned at the other end (which is close to the exhaust gas recirculation passage) among the plurality of cylinders explodes, most of exhaust gas generated in the cylinder flows in the exhaust passage through the exhaust manifold. At this time, the added fuel, which remains in the exhaust manifold between the cylinders positioned at both ends of the exhaust manifold, is pushed back toward the exhaust passage by the exhaust gas. For this reason, the flow of the added fuel in the exhaust gas recirculation passage is suppressed. Accordingly, it is possible to reduce the amount of the added fuel flowing to the exhaust gas recirculation (EGR) system.

The cylinder, which is adjacent to the cylinder positioned at the other end, may explode after the explosion of the cylinder positioned at the other end. When the cylinder, which is adjacent to the cylinder positioned at the other end among the plurality of cylinders, explodes, most of the exhaust gas generated in the cylinder flows in the exhaust passage through the exhaust manifold. At this time, the added fuel, which remains in the exhaust manifold between the cylinder positioned at one end of the exhaust manifold and the cylinder adjacent to the cylinder positioned at the other end of the exhaust manifold, is pushed back toward the exhaust passage by the exhaust gas. For this reason, the flow of the added fuel in the exhaust gas recirculation passage is further suppressed. Accordingly, it is possible to further reduce the amount of the added fuel flowing to the exhaust gas recirculation (EGR) system.

The cylinders may explode in turn toward the one side from the other side after the explosion of the cylinder positioned at the other end. In this case, since the added fuel is sequentially and effectively pushed back toward the exhaust passage by the exhaust gas that is generated in the respective cylinders, it is possible to further reduce the amount of the added fuel flowing to the exhaust gas recirculation (EGR) system.

According to the invention, there is provided an internal combustion engine that can reduce the amount of added fuel flowing to the exhaust gas recirculation (EGR) system.

### BRIEF DESCRIPTION OF THE DRAWINGS

Fig. 1 is a diagram illustrating the schematic structure of a diesel engine as an internal combustion engine according to a first embodiment.
Fig. 2 is a diagram simply illustrating the diesel engine illustrated in Fig. 1.
Fig. 3 is a graph illustrating the time history of the flow rate of exhaust gas that is discharged from respective cylinders illustrated in Fig. 2.
Fig. 4 is a diagram simply illustrating an example of a diesel engine of which the layout of an exhaust passage, an EGR passage, and a fuel addition valve is different from that of the first embodiment, as a comparative example.
Fig. 5 is a graph illustrating the analysis results of the time history of the concentration of added fuel that flows in the EGR passage.
Fig. 6 is a diagram illustrating the schematic structure of a diesel engine as an internal combustion engine according to a second embodiment.
Fig. 7 is a diagram simply illustrating the diesel engine illustrated in Fig. 6.
Fig. 8 is a graph illustrating the time history of the flow rate of exhaust gas that is discharged from each cylinder illustrated in Fig. 7.
Fig. 9 is a diagram simply illustrating a modification of the diesel engine as the internal combustion engine according to the second embodiment.

### DETAILED DESCRIPTION

Embodiments of the invention will be described in detail below with reference to the drawings. Meanwhile, the same elements or equivalent elements are denoted in the drawings by the same reference numerals and the repeated description thereof will be omitted.

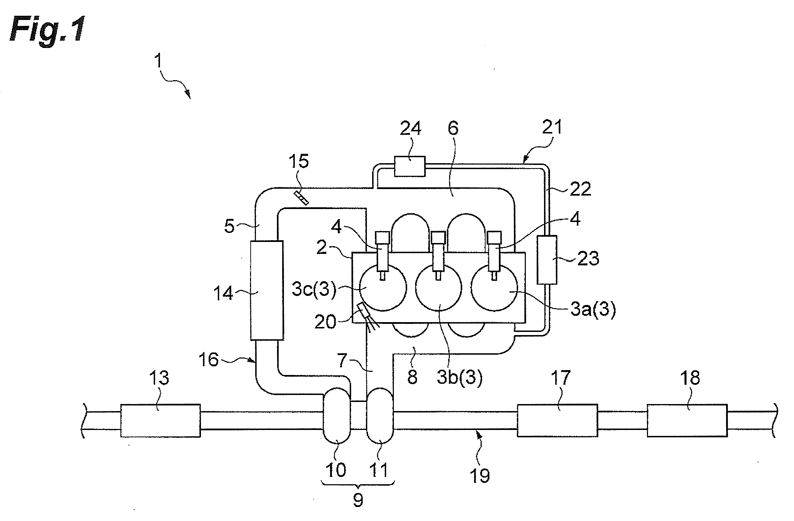

Fig. 1 is a diagram illustrating the schematic structure of a diesel engine as an internal combustion engine according to a first embodiment. In Fig. 1, a diesel engine (hereinafter, simply referred to as an engine) 1 that is an internal combustion engine according to this embodiment is an in-line three-cylinder diesel engine that is mounted on a vehicle.

The engine 1 includes an engine body 2. The engine body 2 includes three cylinders 3 (a #1 cylinder 3a, a #2 cylinder 3b, and a #3 cylinder 3c) that are arranged in one direction and three injectors 4 that inject fuel into combustion chambers of the cylinders 3, respectively. A common rail (not illustrated), which stores fuel, is connected to the respective injectors 4.

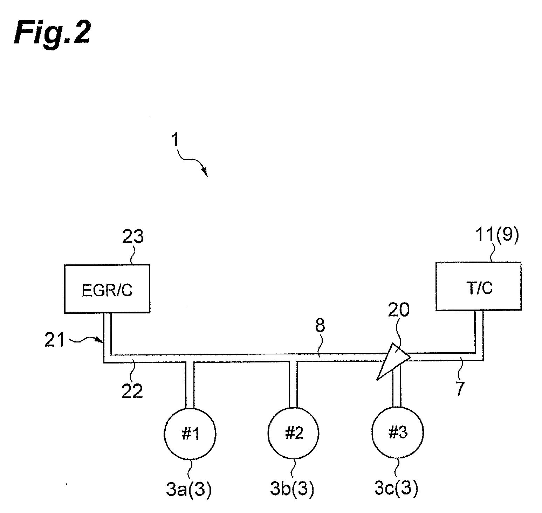

An intake passage 5, which allows air to be taken into the combustion chambers of the respective cylinders 3, is connected to one side of the engine body 2 through an intake manifold 6. An exhaust passage 7, through which exhaust gas generated in the combustion chambers of the respective cylinders 3 is discharged, is connected to the other side of the engine body 2 through an exhaust manifold 8. Also as illustrated in Fig. 2, the exhaust passage 7 is connected to a portion of the exhaust manifold 8 that corresponds to the #3 cylinder 3c positioned at one end among the respective cylinders 3.

Further, the engine 1 includes a turbocharger 9 for pressurizing air, which is to be taken into the combustion chambers of the respective cylinders 3, by the energy of exhaust gas generated in the combustion chambers of the respective cylinders 3. The turbocharger 9 includes a compressor 10 that is provided on the intake passage 5 and a turbine 11 that is provided on the exhaust passage 7.

An air cleaner 13 is provided on the intake passage 5 on the upstream side of the compressor 10. An intercooler 14 and a throttle valve 15 are provided on the intake passage 5 on the downstream side of the compressor 10. The intake passage 5, the intake manifold 6, the compressor 10, the air cleaner 13, the intercooler 14, and the throttle valve 15 form an intake system 16.

A diesel particulate filter (DPF) 17 and a NOₓ reduction catalyst 18 are provided on the exhaust passage 7 on the downstream side of the turbine 11. The exhaust passage 7, the exhaust manifold 8, the turbine 11, the DPF 17, and the NOₓ reduction catalyst 18 form an exhaust system 19.

A fuel addition valve 20, which adds fuel to exhaust gas generated in the combustion chambers of the respective cylinders 3, is mounted on the engine body 2. Fuel is a reducing agent that is used to purify NOₓ by the NOₓ reduction catalyst 18. Also as illustrated in Fig. 2, the fuel addition valve 20 is disposed at a portion that corresponds to the #3 cylinder 3c positioned at one end (which is close to the exhaust passage 7) among the respective cylinders 3. The fuel addition valve 20 is controlled by a controller (not illustrated) so as to add fuel to the exhaust passage 7 when gas is exhausted from the #3 cylinder 3c after the explosion of the #3 cylinder 3c.

Further, the engine 1 includes an exhaust gas recirculation system (EGR system) 21 for recirculating a part of exhaust gas, which is generated in the combustion chambers of the respective cylinders 3, in the combustion chambers of the respective cylinders 3 as exhaust gas recirculation gas (EGR gas).

The EGR system 21 includes an exhaust gas recirculation passage (EGR passage) 22 that connects the exhaust manifold 8 to the intake manifold 6 and allows the EGR gas to return to the respective cylinders 3, an EGR cooler 23 that is provided on the EGR passage 22 and cools the EGR gas flowing in the EGR passage 22, and an EGR valve 24 that is provided on the EGR passage 22 on the downstream side of the EGR cooler 23 and adjusts the flow rate of the EGR gas returning to the intake manifold 6 from the exhaust manifold 8.

Also as illustrated in Fig. 2, one end of the EGR passage 22 is connected to a portion of the exhaust manifold 8 that corresponds to the #1 cylinder 3a positioned at the other end among the respective cylinders 3. Accordingly, a portion, to which the EGR gas is introduced, of the EGR passage 22 is most away from the fuel addition valve 20. The other end of the EGR passage 22 is connected to the upstream portion of the intake manifold 6. Meanwhile, the other end of the EGR passage 22 may be connected to the intake passage 5.

In the above-mentioned engine 1, the explosion order of the respective cylinders 3 is the order of the #1 cylinder 3a, the #2 cylinder 3b, and the #3 cylinder 3c. That is, after the explosion of the #3 cylinder 3c that is positioned at one end (which is close to the exhaust passage 7) among the respective cylinders 3, the #1 cylinder 3a that is positioned at the other end (which is close to the EGR passage 22) among the respective cylinders 3 explodes. After that, the #2 cylinder 3b, which is adjacent to the #1 cylinder 3a positioned at the other end among the respective cylinders 3, explodes.

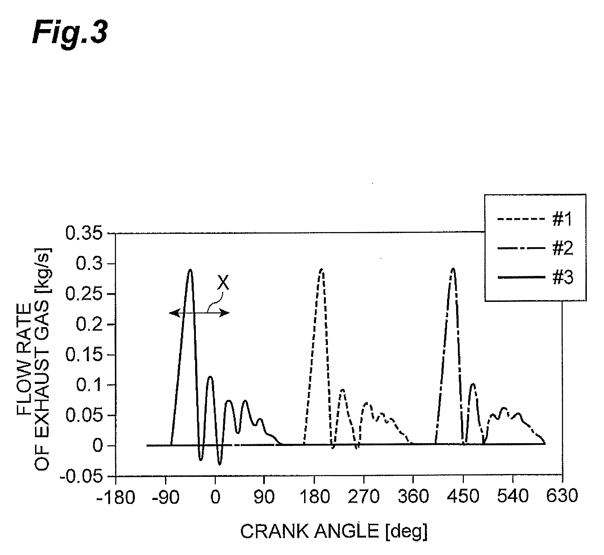

Since the respective cylinders 3 explode in the order of the #1 cylinder 3a, the #2 cylinder 3b, and the #3 cylinder 3c, the exhaust order of the respective cylinders 3 is also the order of the #1 cylinder 3a, the #2 cylinder 3b, and the #3 cylinder 3c as illustrated in Fig. 3. Fig. 3 is a graph illustrating the time history of the flow rate of exhaust gas that is discharged from the respective cylinders. Meanwhile, in Fig. 3, a crank angle becomes 0° when the #1 cylinder 3a reaches a compression top dead center. As known from Fig. 3, gas is exhausted from the #1 cylinder 3a after gas is exhausted from the #3 cylinder 3c. When gas is exhausted from the #3 cylinder 3c, fuel is added from the fuel addition valve 20. A fuel addition period X is a period in which a crank angle is changed by a predetermined angle (for example, 100°) from the point of time when gas starts to be exhausted from the #3 cylinder 3c.

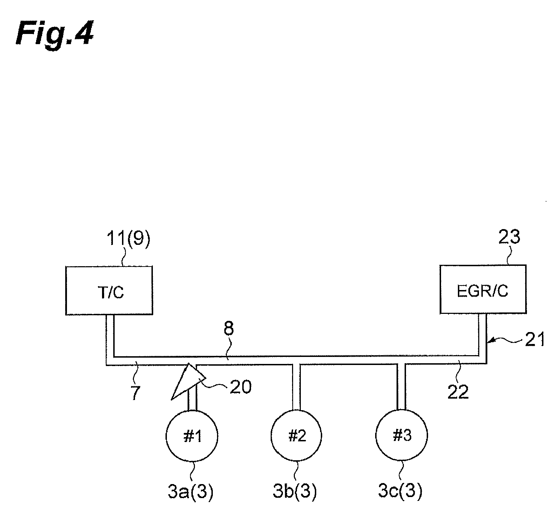

Fig. 4 is a diagram simply illustrating an example of an engine of which the layout of an exhaust passage 7, an EGR passage 22, and a fuel addition valve 20 is different from that of the first embodiment, as a comparative example. In Fig. 4, the exhaust passage 7 is connected to a portion corresponding to a #1 cylinder 3a. The EGR passage 22 is connected to a portion corresponding to a #3 cylinder 3c. The fuel addition valve 20 is connected to a portion corresponding to the #1 cylinder 3a. The explosion order of the respective cylinders 3 is the order of the #1 cylinder 3a, the #2 cylinder 3b, and the #3 cylinder 3c. The fuel addition valve 20 adds fuel when gas is exhausted from the #1 cylinder 3 a.

In the exhaust stroke of the #1 cylinder 3a, most of exhaust gas generated in the #1 cylinder 3 a flows in the exhaust passage 7 and a part of the exhaust gas flows in the EGR passage 22 through the exhaust manifold 8. Further, fuel is added from the fuel addition valve 20 in the exhaust stroke of the #1 cylinder 3a. Then, the added fuel flows in the exhaust passage 7 and flows in the EGR passage 22 through the exhaust manifold 8.

After that, in the exhaust stroke of the #2 cylinder 3b, most of exhaust gas generated in the #2 cylinder 3b flows in the exhaust passage 7 through the exhaust manifold 8 and a part of the exhaust gas flows in the EGR passage 22 through the exhaust manifold 8. At this time, the added fuel, which remains in the exhaust manifold 8 between the #2 cylinder 3b and the #3 cylinder 3c, is pushed toward the EGR passage 22 by the exhaust gas. Accordingly, since the amount of the added fuel flowing in the EGR passage 22 is increased, the added fuel is solidified and deposited on the EGR cooler 23 and the EGR valve 24. For this reason, there is a concern that the clogging or the like of the EGR cooler 23 and the EGR valve 24 may occur.

In contrast, in this embodiment, as illustrated in Fig. 2, the exhaust passage 7 is connected to a portion of the exhaust manifold 8 that corresponds to the #3 cylinder 3c positioned at one end among the respective cylinders 3. The EGR passage 22 is connected to a portion of the exhaust manifold 8 that corresponds to the #1 cylinder 3a positioned at the other end among the respective cylinders 3. The fuel addition valve 20 is disposed at a portion that corresponds to the #3 cylinder 3c positioned at one end among the respective cylinders 3, and adds fuel when gas is exhausted from the #3 cylinder 3c. Further, after the explosion of the #3 cylinder 3c that is positioned at one end among the respective cylinders 3, the #1 cylinder 3a that is positioned at the other end among the respective cylinders 3 explodes. After that, the #2 cylinder 3b, which is adjacent to the #1 cylinder 3a positioned at the other end among the respective cylinders 3, explodes.

In the exhaust stroke of the #3 cylinder 3c, most of exhaust gas generated in the #3 cylinder 3c flows in the exhaust passage 7 and a part of the exhaust gas flows in the EGR passage 22 through the exhaust manifold 8. Further, fuel is added from the fuel addition valve 20 in the exhaust stroke of the #3 cylinder 3c. Then, the added fuel flows in the exhaust passage 7 and flows in the EGR passage 22 through the exhaust manifold 8.

After that, in the exhaust stroke of the #1 cylinder 3a, most of exhaust gas generated in the #1 cylinder 3 a flows in the exhaust passage 7 through the exhaust manifold 8 and a part of the exhaust gas flows in the EGR passage 22. At this time, the added fuel, which remains in the exhaust manifold 8 between the #1 cylinder 3a and the #3 cylinder 3c, is pushed back toward the exhaust passage 7 by the exhaust gas. For this reason, the flow of the added fuel in the EGR passage 22 is suppressed. Accordingly, it is possible to reduce the amount of the added fuel flowing to the EGR system 21.

After that, in the exhaust stroke of the #2 cylinder 3b, most of exhaust gas generated in the #2 cylinder 3b flows in the exhaust passage 7 through the exhaust manifold 8 and a part of the exhaust gas flows in the EGR passage 22 through the exhaust manifold 8. At this time, the added fuel, which remains in the exhaust manifold 8 between the #2 cylinder 3b and the #3 cylinder 3c, is pushed back toward the exhaust passage 7 by the exhaust gas. For this reason, the flow of the added fuel in the EGR passage 22 is further suppressed. Accordingly, it is possible to further reduce the amount of the added fuel flowing to the EGR system 21.

Therefore, according to this embodiment, it is possible to prevent the occurrence of clogging or the like of the EGR cooler 23 and the EGR valve 24 by reducing the amount of the added fuel to be deposited on the EGR cooler 23 and the EGR valve 24. As a result, it is possible to improve the performance of the EGR system 21.

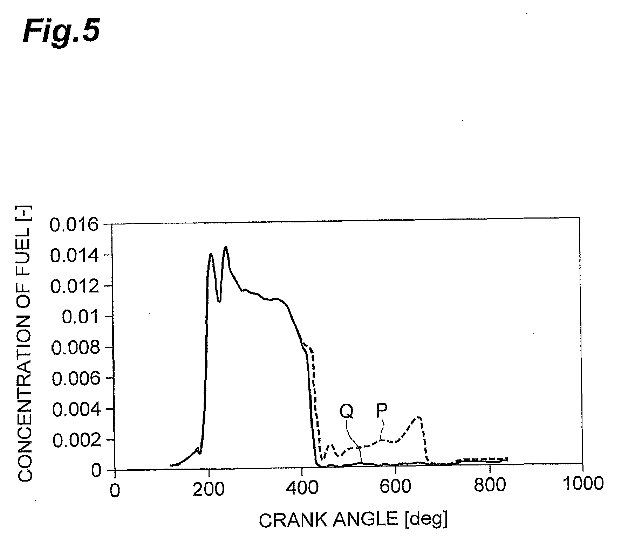

Fig. 5 is a graph illustrating the analysis results of the time history of the concentration of the added fuel that flows in the EGR passage 22. A broken line P of Fig. 5 indicates the results of the comparative example illustrated in Fig. 4, and a solid line Q of Fig. 5 indicates the results of this embodiment illustrated in Fig. 2. Meanwhile, the crank angles of the broken line P and the solid line Q are offset from each other in Fig. 5 so that the broken line P and the solid line Q are easily compared with each other.

As known from Fig. 5, when fuel is added from the fuel addition valve 20, the concentration of the added fuel flowing in the EGR passage 22 becomes high immediately after the addition of fuel and the concentration of the added fuel flowing in the EGR passage 22 then becomes low. However, since the added fuel is pushed toward the EGR passage 22 by the exhaust gas generated in the #2 cylinder 3b in the comparative example, slight added fuel is present in the EGR passage 22 even after that. Meanwhile, since the added fuel is pushed back toward the exhaust passage 7 by the exhaust gas generated in the #1 cylinder 3a in this embodiment, the added fuel is hardly present in the EGR passage 22. Accordingly, the concentration of the added fuel flowing in the EGR passage 22 in this embodiment becomes lower than that in the comparative example.

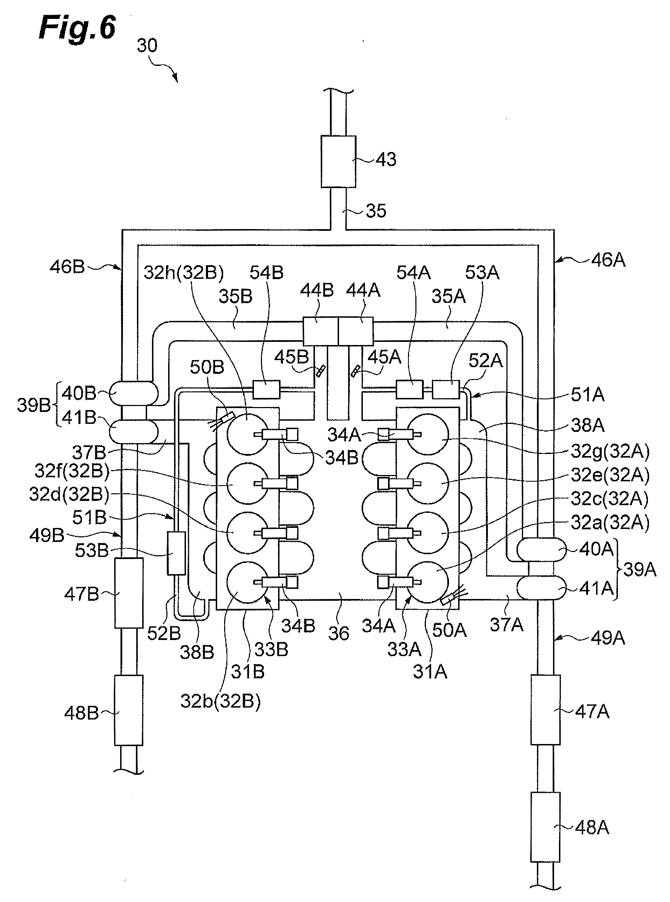

Fig. 6 is a diagram illustrating the schematic structure of a diesel engine as an internal combustion engine according to a second embodiment. In Fig. 6, a diesel engine (hereinafter, simply referred to as an engine) 30 that is an internal combustion engine according to this embodiment is a V-type eight-cylinder diesel engine that is mounted on a vehicle.

The engine 30 includes engine bodies 31A and 31B. The engine body 31A includes a right bank 33A that includes four cylinders 32A (a #1 cylinder 32a, a #3 cylinder 32c, a #5 cylinder 32e, and a #7 cylinder 32g) arranged in one direction, and four injectors 34A that inject fuel into combustion chambers of the cylinders 32A, respectively. The engine body 31B includes a left bank 33B that includes four cylinders 32B (a #2 cylinder 32b, a #4 cylinder 32d, a #6 cylinder 32f, and a #8 cylinder 32h) arranged in one direction, and four injectors 34B that inject fuel into combustion chambers of the cylinders 32B, respectively.

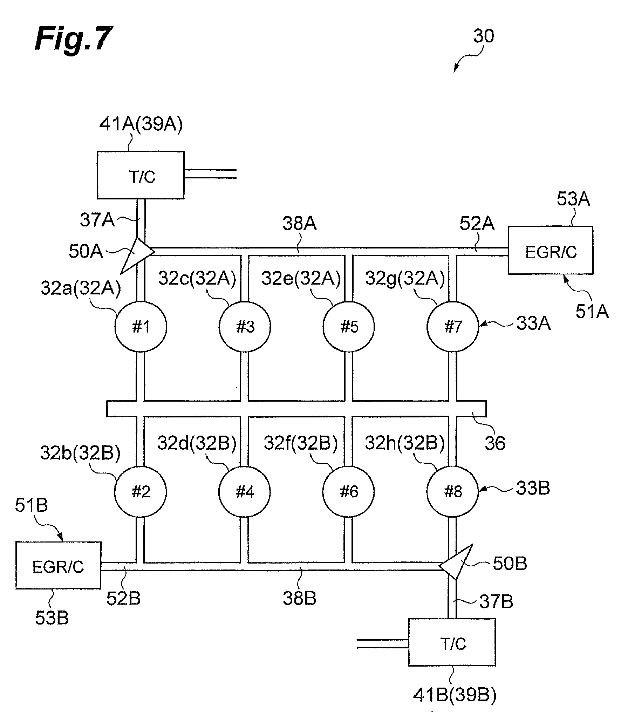

Intake passages 35A and 35B, which allow air to be taken into the combustion chambers of the respective cylinders 32A and 32B, are connected to one sides (sides facing each other) of the engine bodies 31A and 31B through an intake manifold 6. Exhaust passages 37A and 37B, through which exhaust gas generated in the combustion chambers of the respective cylinders 32A and 32B is discharged, are connected to the other sides of the engine bodies 31A and 31B through exhaust manifolds 38A and 38B, respectively. Also as illustrated in Fig. 7, the exhaust passage 37A is connected to a portion of the exhaust manifold 38A that corresponds to the #1 cylinder 32a positioned at one end among the respective cylinders 32A. Also as illustrated in Fig. 7, the exhaust passage 37B is connected to a portion of the exhaust manifold 38B that corresponds to the #8 cylinder 32h positioned at one end among the respective cylinders 32B.

Further, the engine 30 includes turbochargers 39A and 39B for pressurizing air, which is to be taken into the combustion chambers of the respective cylinders 32A and 32B, by the energy of exhaust gas generated in the combustion chambers of the respective cylinders 32A and 32B. The turbochargers 39A and 39B include compressors 40A and 40B that are provided on the intake passages 35A and 35B and turbines 41A and 41B that are provided on the exhaust passages 37A and 37B, respectively.

The intake passages 35A and 35B are connected to a common intake passage 35. An air cleaner 43 is provided on the common intake passage 35. Intercoolers 44A and 44B and throttle valves 45A and 45B are provided on the intake passages 35A and 35B on the downstream side of the compressors 40A and 40B, respectively. The common intake passage 35, the intake passage 35A, the intake manifold 36, the compressor 40A, the air cleaner 43, the intercooler 44A, and the throttle valve 45A form an intake system 46A. The common intake passage 35, the intake passage 35B, the intake manifold 36, the compressor 40B, the air cleaner 43, the intercooler 44B, and the throttle valve 45B form an intake system 46B.

DPFs 47A and 47B and NOₓ reduction catalysts 48A and 48B are provided on the exhaust passages 37A and 37B on the downstream side of the turbines 41A and 41B, respectively. The exhaust passages 37A and 37B, the exhaust manifolds 38A and 38B, the turbines 41A and 41B, the DPFs 47A and 47B, and the NOₓ reduction catalysts 48A and 48B form exhaust systems 49A and 49B, respectively.

Fuel addition valves 50A and 50B, which add fuel to exhaust gas generated in the combustion chambers of the respective cylinders 32A and 32B, are mounted on the engine bodies 31A and 31B, respectively. Also as illustrated in Fig. 7, the fuel addition valve 50A is disposed at a portion that corresponds to the #1 cylinder 32a positioned at one end (which is close to the exhaust passage 37A) among the respective cylinders 32A. The fuel addition valve 50A is controlled by a controller (not illustrated) so as to add fuel to the exhaust passage 37A when gas is exhausted from the #1 cylinder 32a after the explosion of the #1 cylinder 32a.

Also as illustrated in Fig. 7, the fuel addition valve 50B is disposed at a portion that corresponds to the #8 cylinder 32h positioned at one end (which is close to the exhaust passage 37B) among the respective cylinders 32B. The fuel addition valve 50B is controlled by a controller (not illustrated) so as to add fuel to the exhaust passage 37B when gas is exhausted from the #8 cylinder 32h after the explosion of the #8 cylinder 32h.

Further, the engine 30 includes exhaust gas recirculation systems (EGR systems) 51A and 51B for recirculating a part of exhaust gas, which is generated in the combustion chambers of the respective cylinders 32A and 32B, in the combustion chambers of the respective cylinders 32A and 32B as EGR gas.

The EGR systems 51A and 51B include exhaust gas recirculation passages (EGR passages) 52A and 52B that connects the exhaust manifolds 38A and 38B to the intake passages 35A and 35B and allows the EGR gas to return to the respective cylinders 32A and 32B, EGR coolers 53A and 53B that are provided on the EGR passages 52A and 52B and cool the EGR gas flowing in the EGR passages 52A and 52B, and EGR valves 54A and 54B that are provided on the EGR passages 52A and 52B on the downstream side of the EGR coolers 53A and 53B and adjust the flow rate of the EGR gas returning to the intake passages 35A and 35B from the exhaust manifolds 38A and 38B, respectively.

Also as illustrated in Fig. 7, one end of the EGR passage 52A is connected to a portion of the exhaust manifold 38A that corresponds to the #7 cylinder 32g positioned at the other end among the respective cylinders 32A. Accordingly, a portion, to which the EGR gas is introduced, of the EGR passage 52A is most away from the fuel addition valve 50A. The other end of the EGR passage 52A is connected to a portion of the intake passage 35A between the intake manifold 36 and the throttle valve 45A. Meanwhile, the other end of the EGR passage 52A may be connected to the intake manifold 36.

Also as illustrated in Fig. 7, one end of the EGR passage 52B is connected to a portion of the exhaust manifold 38B that corresponds to the #2 cylinder 32b positioned at the other end among the respective cylinders 32B. Accordingly, a portion, to which the EGR gas is introduced, of the EGR passage 52B is most away from the fuel addition valve 50B. The other end of the EGR passage 52B is connected to a portion of the intake passage 35B between the intake manifold 36 and the throttle valve 45B. Meanwhile, the other end of the EGR passage 52B may be connected to the intake manifold 36.

In the above-mentioned engine 30, the explosion order of the respective cylinders 32A and 32B is the order of the #1 cylinder 32a, the #2 cylinder 32b, the #7 cylinder 32g, the #3 cylinder 32c, the #4 cylinder 32d, the #5 cylinder 32e, the #6 cylinder 32f, and the #8 cylinder 32h. That is, the explosion of the banks 33A and 33B is performed at irregular intervals.

Here, the explosion order of the respective cylinders 32A of the right bank 33A is the order of the #1 cylinder 32a, the #7 cylinder 32g, the #3 cylinder 32c, and the #5 cylinder 32e. That is, after the explosion of the #1 cylinder 32a that is positioned at one end (which is close to the exhaust passage 37A) among the respective cylinders 32A, the #7 cylinder 32g that is positioned at the other end (which is close to the EGR passage 52A) among the respective cylinders 32A explodes. Then, the #3 cylinder 32c and the #5 cylinder 32e sequentially explode.

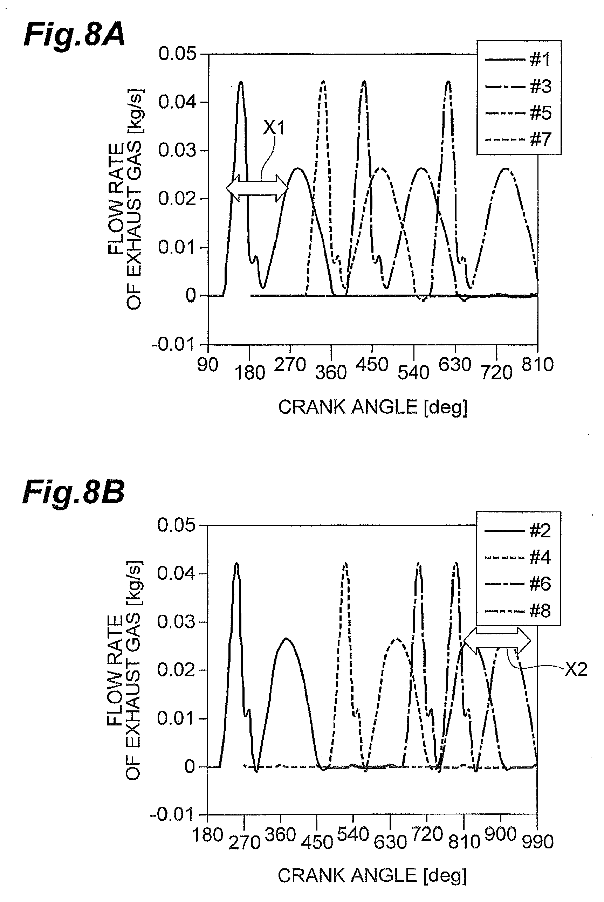

Since the respective cylinders 32A explode in the order of the #1 cylinder 32a, the #7 cylinder 32g, the #3 cylinder 32c, and the #5 cylinder 32e, the exhaust order of the respective cylinders 32A is also the order of the #1 cylinder 32a, the #7 cylinder 32g, the #3 cylinder 32c, and the #5 cylinder 32e as illustrated in Fig. 8A. Fig. 8A is a graph illustrating the time history of the flow rate of exhaust gas that is discharged from the respective cylinders 32A of the right bank 33A. As known from Fig. 8A, gas is exhausted from the #7 cylinder 32g after gas is exhausted from the #1 cylinder 32a. When gas is exhausted from the #1 cylinder 32a, fuel is added from the fuel addition valve 50A. A fuel addition period X1 is a period in which a crank angle is changed by a predetermined angle from the point of time when gas starts to be exhausted from the #1 cylinder 32a.

The explosion order of the respective cylinders 32B of the left bank 33B is the order of the #2 cylinder 32b, the #4 cylinder 32d, the #6 cylinder 32f, and the #8 cylinder 32h. That is, after the explosion of the #8 cylinder 32h that is positioned at one end (which is close to the exhaust passage 37B) among the respective cylinders 32B, the #2 cylinder 32b that is positioned at the other end (which is close to the EGR passage 52B) among the respective cylinders 32B explodes. Then, the #4 cylinder 32d that is adjacent to the #2 cylinder 32b positioned at the other end among the respective cylinders 32B explodes. Accordingly, after the explosion of the #2 cylinder 32b that is positioned at the other end among the respective cylinders 32B, the #4 cylinder 32d and the #6 cylinder 32f explode in turn toward one side (the exhaust passage 37B) from the other side (the EGR passage 52B).

Since the respective cylinders 32B explode in the order of the #2 cylinder 32b, the #4 cylinder 32d, the #6 cylinder 32f, and the #8 cylinder 32h, the exhaust order of the respective cylinders 32B is also the order of the #2 cylinder 32b, the #4 cylinder 32d, the #6 cylinder 32f, and the #8 cylinder 32h as illustrated in Fig. 8B. Fig. 8B is a graph illustrating the time history of the flow rate of exhaust gas that is discharged from the respective cylinders 32B of the left bank 33B. As known from Fig. 8B, gas is exhausted from the #2 cylinder 32b after gas is exhausted from the #8 cylinder 32h. When gas is exhausted from the #8 cylinder 32h, fuel is added from the fuel addition valve 50B. A fuel addition period X2 is a period in which a crank angle is changed by a predetermined angle from the point of time when gas starts to be exhausted from the #8 cylinder 32h.

In the exhaust stroke of the #1 cylinder 32a of the right bank 33A, most of exhaust gas generated in the #1 cylinder 32a flows in the exhaust passage 37A and a part of the exhaust gas flows in the EGR passage 52A through the exhaust manifold 38A. Further, fuel is added from the fuel addition valve 50A in the exhaust stroke of the #1 cylinder 32a. Then, the added fuel flows in the exhaust passage 37A and flows in the EGR passage 52A through the exhaust manifold 38A.

After that, in the exhaust stroke of the #7 cylinder 32g, most of exhaust gas generated in the #7 cylinder 32g flows in the exhaust passage 37A through the exhaust manifold 38A and a part of the exhaust gas flows in the EGR passage 52A. At this time, the added fuel, which remains in the exhaust manifold 38A between the #1 cylinder 32a and the #7 cylinder 32g, is pushed back toward the exhaust passage 37A by the exhaust gas.

After that, in the exhaust stroke of the #3 cylinder 32c, most of exhaust gas generated in the #3 cylinder 32c flows in the exhaust passage 37A through the exhaust manifold 38A and a part of the exhaust gas flows in the EGR passage 52A through the exhaust manifold 38A. At this time, the added fuel, which remains in the exhaust manifold 38A between the #1 cylinder 32a and the #3 cylinder 32c, is pushed back toward the exhaust passage 37A by the exhaust gas.

After that, in the exhaust stroke of the #5 cylinder 32e, most of exhaust gas generated in the #5 cylinder 32e flows in the exhaust passage 37A through the exhaust manifold 38A and a part of the exhaust gas flows in the EGR passage 52A through the exhaust manifold 38A.

In the exhaust stroke of the #8 cylinder 32h of the left bank 33B, most of exhaust gas generated in the #8 cylinder 32h flows in the exhaust passage 37B and a part of the exhaust gas flows in the EGR passage 52B through the exhaust manifold 38B. Further, fuel is added from the fuel addition valve 50B in the exhaust stroke of the #8 cylinder 32h. Then, the added fuel flows in the exhaust passage 37B and flows in the EGR passage 52B through the exhaust manifold 38B.

After that, in the exhaust stroke of the #2 cylinder 32b, most of exhaust gas generated in the #2 cylinder 32b flows in the exhaust passage 37B through the exhaust manifold 38B and a part of the exhaust gas flows in the EGR passage 52B. At this time, the added fuel, which remains in the exhaust manifold 38B between the #2 cylinder 32b and the #8 cylinder 32h, is pushed back toward the exhaust passage 37B by the exhaust gas.

After that, in the exhaust stroke of the #4 cylinder 32d, most of exhaust gas generated in the #4 cylinder 32d flows in the exhaust passage 37B through the exhaust manifold 38B and a part of the exhaust gas flows in the EGR passage 52B through the exhaust manifold 38B. At this time, the added fuel, which remains in the exhaust manifold 38B between the #4 cylinder 32d and the #8 cylinder 32h, is pushed back toward the exhaust passage 37B by the exhaust gas.

After that, in the exhaust stroke of the #6 cylinder 32f, most of exhaust gas generated in the #6 cylinder 32f flows in the exhaust passage 37B through the exhaust manifold 38B and a part of the exhaust gas flows in the EGR passage 52B through the exhaust manifold 38B. At this time, the added fuel, which remains in the exhaust manifold 38B between the #6 cylinder 32f and the #8 cylinder 32h, is pushed back toward the exhaust passage 37B by the exhaust gas.

As described above, according to this embodiment, in the right bank 33A, the exhaust passage 37A is connected to a portion of the exhaust manifold 38A that corresponds to the #1 cylinder 32a positioned at one end among the respective cylinders 32A. The EGR passage 52A is connected to a portion of the exhaust manifold 38A that corresponds to the #7 cylinder 32g positioned at the other end among the respective cylinders 32A. The fuel addition valve 50A is disposed at a portion that corresponds to the #1 cylinder 32a positioned at one end among the respective cylinders 32A, and adds fuel when gas is exhausted from the #1 cylinder 32a. Further, after the explosion of the #1 cylinder 32a that is positioned at one end among the respective cylinders 32A, the #7 cylinder 32g that is positioned at the other end among the respective cylinders 32A explodes. For this reason, as described above, the added fuel, which remains in the exhaust manifold 38A between the #1 cylinder 32a and the #7 cylinder 32g, is pushed toward the exhaust passage 37A by the exhaust gas. Accordingly, the flow of the added fuel in the EGR passage 52A is suppressed. Therefore, it is possible to reduce the amount of the added fuel flowing to the EGR system 51A.

In the left bank 33B, the exhaust passage 37B is connected to a portion of the exhaust manifold 38B that corresponds to the #8 cylinder 32h positioned at one end among the respective cylinders 32B. The EGR passage 52B is connected to a portion of the exhaust manifold 38B that corresponds to the #2 cylinder 32b positioned at the other end among the respective cylinders 32B. The fuel addition valve 50B is disposed at a portion that corresponds to the #8 cylinder 32h positioned at one end among the respective cylinders 32B, and adds fuel when gas is exhausted from the #8 cylinder 32h. Further, after the explosion of the #8 cylinder 32h that is positioned at one end among the respective cylinders 32B, the #2 cylinder 32b that is positioned at the other end among the respective cylinders 32B explodes. For this reason, as described above, the added fuel, which remains in the exhaust manifold 38B between the #2 cylinder 32b and the #8 cylinder 32h, is pushed toward the exhaust passage 37B by the exhaust gas. Accordingly, the flow of the added fuel in the EGR passage 52B is suppressed. Therefore, it is possible to reduce the amount of the added fuel flowing to the EGR system 51B.

Furthermore, in the left bank 33B, the #4 cylinder 32d adjacent to the #2 cylinder 32b explodes after the explosion of the #2 cylinder 32b that is positioned at the other end among the respective cylinders 32B. For this reason, as described above, the added fuel, which remains in the exhaust manifold 38B between the #4 cylinder 32d and the #8 cylinder 32h, is pushed back toward the exhaust passage 37B by the exhaust gas. Accordingly, the flow of the added fuel in the EGR passage 52B is further suppressed. Therefore, it is possible to further reduce the amount of the added fuel flowing to the EGR system 51B.

In addition, in the left bank 33B, the #4 cylinder 32d and the #6 cylinder 32f explode in turn toward one side from the other side after the explosion of the #2 cylinder 32b that is positioned at the other end among the respective cylinders 32B. Accordingly, since the added fuel is sequentially and effectively pushed back toward the exhaust passage 37B by the exhaust gas that is generated in the respective cylinders 32B, it is possible to further reduce the amount of the added fuel flowing to the EGR system 51B.

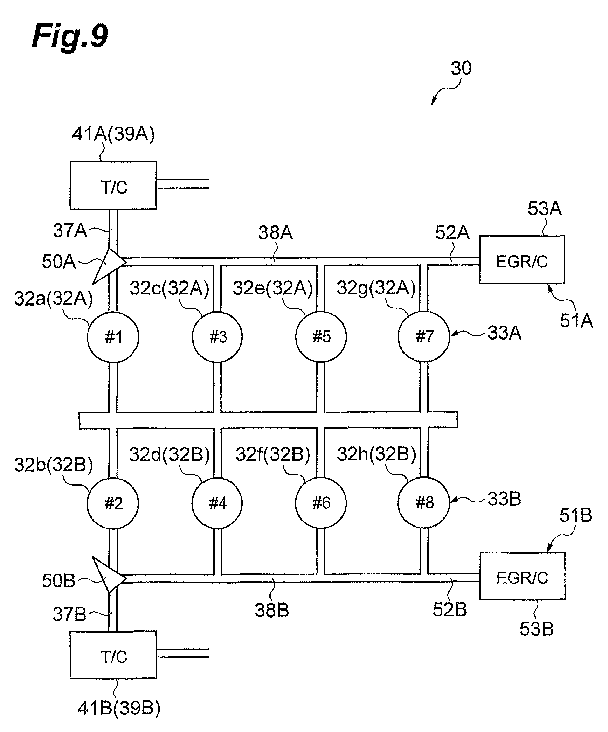

Fig. 9 is a diagram simply illustrating a modification of the diesel engine 30 as the internal combustion engine according to the second embodiment.

In Fig. 9, in a right bank 33A, the exhaust passage 37A is connected to a portion of the exhaust manifold 38A that corresponds to the #1 cylinder 32a positioned at one end among the respective cylinders 32A. The EGR passage 52A is connected to a portion of the exhaust manifold 38A that corresponds to the #7 cylinder 32g positioned at the other end among the respective cylinders 32A. The fuel addition valve 50A is disposed at a portion that corresponds to the #1 cylinder 32a positioned at one end (which is close to the exhaust passage 37A) among the respective cylinders 32A. The fuel addition valve 50A adds fuel to the exhaust passage 37A when gas is exhausted from the #1 cylinder 32a after the explosion of the #1 cylinder 32a.

In the left bank 33B, the exhaust passage 37B is connected to a portion of the exhaust manifold 38B that corresponds to the #2 cylinder 32b positioned at one end among the respective cylinders 32B. The EGR passage 52B is connected to a portion of the exhaust manifold 38B that corresponds to the 8 cylinder 32h positioned at the other end among the respective cylinders 32B. The fuel addition valve 50B is disposed at a portion that corresponds to the #2 cylinder 32b positioned at one end (which is close to the exhaust passage 37B) among the respective cylinders 32B. The fuel addition valve 50B adds fuel to the exhaust passage 37B when gas is exhausted from the #2 cylinder 32b after the explosion of the #2 cylinder 32b.

In the engine 30, the explosion order of the respective cylinders 32A and 32B is the order of the #1 cylinder 32a, the #2 cylinder 32b, the #7 cylinder 32g, the #8 cylinder 32h, the #4 cylinder 32d, the #5 cylinder 32e, the #6 cylinder 32f, and the #3 cylinder 32c. That is, the explosion of the banks 33A and 33B is performed at irregular intervals.

Here, the explosion order of the respective cylinders 32A of the right bank 33A is the order of the #1 cylinder 32a, the #7 cylinder 32g, the #5 cylinder 32e, and the #3 cylinder 32c. That is, after the explosion of the #1 cylinder 32a that is positioned at one end (which is close to the exhaust passage 37A) among the respective cylinders 32A, the #7 cylinder 32g that is positioned at the other end (which is close to the EGR passage 52A) among the respective cylinders 32A explodes. Then, the #5 cylinder 32e, which is adjacent to the #7 cylinder 32g positioned at the other end among the respective cylinders 32A, explodes. Accordingly, after the explosion of the #7 cylinder 32g that is positioned at the other end among the respective cylinders 32A, the #5 cylinder 32e and the #3 cylinder 32c explode in turn toward one side (the exhaust passage 37A) from the other side (the EGR passage 52A).

The explosion order of the respective cylinders 32B of the left bank 33B is the order of the #2 cylinder 32b, the #8 cylinder 32h, the #4 cylinder 32d, and the #6 cylinder 32f. That is, after the explosion of the #2 cylinder 32b that is positioned at one end (which is close to the exhaust passage 37B) among the respective cylinders 32B, the #8 cylinder 32h that is positioned at the other end (which is close to the EGR passage 52B) among the respective cylinders 32B explodes. Then, the #4 cylinder 32d and the #6 cylinder 32f sequentially explode.

In the exhaust stroke of the #1 cylinder 32a of the right bank 33A, most of exhaust gas generated in the #1 cylinder 32a flows in the exhaust passage 37A and a part of the exhaust gas flows in the EGR passage 52A through the exhaust manifold 38A. Further, fuel is added from the fuel addition valve 20A in the exhaust stroke of the #1 cylinder 32a. Then, the added fuel flows in the exhaust passage 37A and flows in the EGR passage 52A through the exhaust manifold 38A.

After that, in the exhaust stroke of the #7 cylinder 32g, most of exhaust gas generated in the #7 cylinder 32g flows in the exhaust passage 37A through the exhaust manifold 38A and a part of the exhaust gas flows in the EGR passage 52A. At this time, the added fuel, which remains in the exhaust manifold 38B between the #1 cylinder 32a and the #7 cylinder 32g, is pushed back toward the exhaust passage 37A by the exhaust gas.

After that, in the exhaust stroke of the #5 cylinder 32e, most of exhaust gas generated in the #5 cylinder 32e flows in the exhaust passage 37A through the exhaust manifold 38A and a part of the exhaust gas flows in the EGR passage 52A through the exhaust manifold 38A. At this time, the added fuel, which remains in the exhaust manifold 38A between the #1 cylinder 32a and the #5 cylinder 32e, is pushed back toward the exhaust passage 37A by the exhaust gas.

After that, in the exhaust stroke of the #3 cylinder 32c, most of exhaust gas generated in the #3 cylinder 32c flows in the exhaust passage 37A through the exhaust manifold 38A and a part of the exhaust gas flows in the EGR passage 52A through the exhaust manifold 38A. At this time, the added fuel, which remains in the exhaust manifold 38A between the #1 cylinder 32a and the #3 cylinder 32c, is pushed back toward the exhaust passage 37A by the exhaust gas.

In the exhaust stroke of the #2 cylinder 32b of the left bank 33B, most of exhaust gas generated in the #2 cylinder 32b flows in the exhaust passage 37B and a part of the exhaust gas flows in the EGR passage 52B through the exhaust manifold 38B. Further, fuel is added from the fuel addition valve 50B in the exhaust stroke of the #2 cylinder 32b. Then, the added fuel flows in the exhaust passage 37B and flows in the EGR passage 52B through the exhaust manifold 38B.

After that, in the exhaust stroke of the #8 cylinder 32h, most of exhaust gas generated in the #8 cylinder 32h flows in the exhaust passage 37B through the exhaust manifold 38B and a part of the exhaust gas flows in the EGR passage 52B. At this time, the added fuel, which remains in the exhaust manifold 38B between the #2 cylinder 32b and the #8 cylinder 32h, is pushed back toward the exhaust passage 37B by the exhaust gas.

After that, in the exhaust stroke of the #4 cylinder 32d, most of exhaust gas generated in the #4 cylinder 32d flows in the exhaust passage 37B through the exhaust manifold 38B and a part of the exhaust gas flows in the EGR passage 52B through the exhaust manifold 38B. At this time, the added fuel, which remains in the exhaust manifold 38B between the #2 cylinder 32b and the #4 cylinder 32d, is pushed back toward the exhaust passage 37B by the exhaust gas.

After that, in the exhaust stroke of the #6 cylinder 32f, most of exhaust gas generated in the #6 cylinder 32f flows in the exhaust passage 37B through the exhaust manifold 38B and a part of the exhaust gas flows in the EGR passage 52B through the exhaust manifold 38B.

It is possible to reduce the amount of the added fuel flowing to the EGR systems 51A and 51B even in this modification as described above.

Meanwhile, the invention is not limited to the above-mentioned embodiments. For example, in the eight-cylinder diesel engine of the second embodiment, the explosion order of the respective cylinders 32A of the right bank 33A may be the order of the #1 cylinder 32a, the #7 cylinder 32g, the #5 cylinder 32e, and the #3 cylinder 32c, and the explosion order of the respective cylinders 32B of the left bank 33B may be the order of the #2 cylinder 32b, the #4 cylinder 32d, the #6 cylinder 32f, and the #8 cylinder 32h.

Further, the internal combustion engines of the embodiments have been an in-line three-cylinder diesel engine and a eight-cylinder diesel engine. However, the type of the diesel engine is not particularly limited to these diesel engines and the diesel engine may include a plurality of cylinders that are arranged in one direction as in an in-line four-cylinder diesel engine or a six-cylinder diesel engine. For example, in the in-line four-cylinder diesel engine, the explosion order of the respective cylinders is the order of the #1 cylinder, the #4 cylinder, the #3 cylinder, and the #2 cylinder.

Furthermore, the internal combustion engines of the embodiments have been diesel engines, but the invention may also be applied to a gasoline engine and the like.
A diesel engine includes an exhaust passage through which exhaust gas generated in plural cylinders is discharged, a fuel addition valve adding fuel to the exhaust gas, and an exhaust gas recirculation system including an exhaust gas recirculation passage that allows a part of the exhaust gas to return to the cylinders as exhaust gas recirculation gas. The exhaust passage is connected to a portion of an exhaust manifold corresponding to the #3 cylinder positioned at one end among the plurality of cylinders, the fuel addition valve is disposed at a portion corresponding to the #3 cylinder and adds the fuel when gas is exhausted from the #3 cylinder, the exhaust gas recirculation passage is connected to a portion of the exhaust manifold corresponding to the #1 cylinder positioned at the other end among the plurality of cylinders, and the #1 cylinder explodes after the explosion of the #3 cylinder.

## Claims

1. An internal combustion engine comprising:
an engine body that includes a plurality of cylinders arranged in one direction;
an intake passage that is connected to the engine body through an intake manifold and allows air to be taken into the cylinders;
an exhaust passage which is connected to the engine body through an exhaust manifold and through which exhaust gas generated in the cylinders is discharged;
a fuel addition valve that adds fuel to the exhaust gas; and
an exhaust gas recirculation system including an exhaust gas recirculation passage that connects the exhaust manifold to an intake system including the intake manifold and the intake passage and allows a part of the exhaust gas to return to the cylinders as exhaust gas recirculation gas,
wherein the exhaust passage is connected to a portion of the exhaust manifold that corresponds to the cylinder positioned at one end among the plurality of cylinders,
the fuel addition valve is disposed at a portion that corresponds to the cylinder positioned at the one end and adds the fuel when gas is exhausted from the cylinder positioned at the one end,
the exhaust gas recirculation passage is connected to a portion of the exhaust manifold that corresponds to the cylinder positioned at the other end among the plurality of cylinders, and
the cylinder positioned at the other end explodes after the explosion of the cylinder positioned at the one end.

2. The internal combustion engine according to claim 1,
wherein the cylinder, which is adjacent to the cylinder positioned at the other end, explodes after the explosion of the cylinder positioned at the other end.

3. The internal combustion engine according to claim 2,
wherein the cylinders explode in turn toward the one side from the other side after the explosion of the cylinder positioned at the other end.
